# EUROPEAN PATENT SPECIFICATION

(11) **EP 2 641 681 B1**
(45) Date of publication and mention of the grant of the patent: **29.10.2014**
(21) Application number: 12001988.0
(22) Date of filing: 21.03.2012
(51) Int. Cl.: B23B 39/16, B23B 41/00

(54) **Drilling device for drilling side portions of large section members**
Bohrvorrichtung zum Bohren von Seitenteilen von grossen Formstählen
Dispositif de perçage pour percer des parties latérales de grands profilés

(43) Date of publication of application: 25.09.2013
(73) Proprietor: FICEP S.P.A., 21045 Gazzada Schianno (VA) (IT)
(72) Inventor: Pirovano, Alessandro, 21034 Cocquio Trevisago (IT)
(74) Representative: Mayer, Hans Benno

(56) References cited:
- CN-Y- 201 098 745
- FR-A5- 2 050 686
- US-A- 3 668 971

## Description

### BACKGROUND OF THE INVENTION

The present invention relates to a drilling device for drilling side portions of large section members.

It is already known from prior art, to cut individual section member lengths by a band sawing machine, starting from a section member having a length of about 6 meters and more. As it is also known, the single section member lengths are cut through a making cutting line, the individual section member lengths cut to a target measurement being then loaded in succession into a drilling machine.

Moreover, outside of the section member cutting line, other devices are also provided for performing beveling milling operations on the vertex region where the section member sides meet with one another.

It should be apparent that such a provision of further devices outside of the section member cutting line, represents a substantial drawback, since it is necessary to drive the section members being cut from the saw machine cutting line to another machine for drilling, for example, the section member side portions.

FR 2 050 686 A5 discloses a drilling device comprising the features of the preamble of claim 1.

### SUMMARY OF THE INVENTION

Thus, the aim of the present invention is to overcome the above mentioned drawbacks and provide a section member side drilling machine or device, which is adapted to drill, respectively mill, the section member side portions respectively at a section member vertex point and which machine may be fitted to different section member angles, for example 90° and 60° angles, while allowing the drilling tool axis to be always held perpendicular to a corresponding section member side and the section member vertex milling tool to be held at the section member vertex.

The above aim is achieved by a drilling device for drilling side portions of large section members, the device being arranged in a cutting system for cutting individual section member lengths, starting from a long section member, said device comprising a base thereon swinging support arms extend, the support arms being arranged with a V pattern, enclosing an angle a, each support arm including a plurality of sliding rollers for causing the section member to slide thereon, the swinging arms including guides slidably supporting a controllably driven carriage operatively connected to a threaded screw, each threaded screw being operatively connected to a controllable motor, each carriage having a movable arm which may be controllably displaced along guides and comprising parallel guides engaging a drilling assembly, each drilling assembly being operatively coupled to a driving shaft, each driving shaft being operatively connected to a corresponding controllable motor.

### BRIEF DESCRIPTION OF THE DRAWINGS

Further advantages and characteristics of the present invention will become more apparent hereinafter from the following disclosure, claims and accompanying drawings. The subject matter according to the present invention will be disclosed in a more detailed manner hereinafter with reference to the accompanying drawings, where:
Figure 1 is a front view of the section member drilling device; and

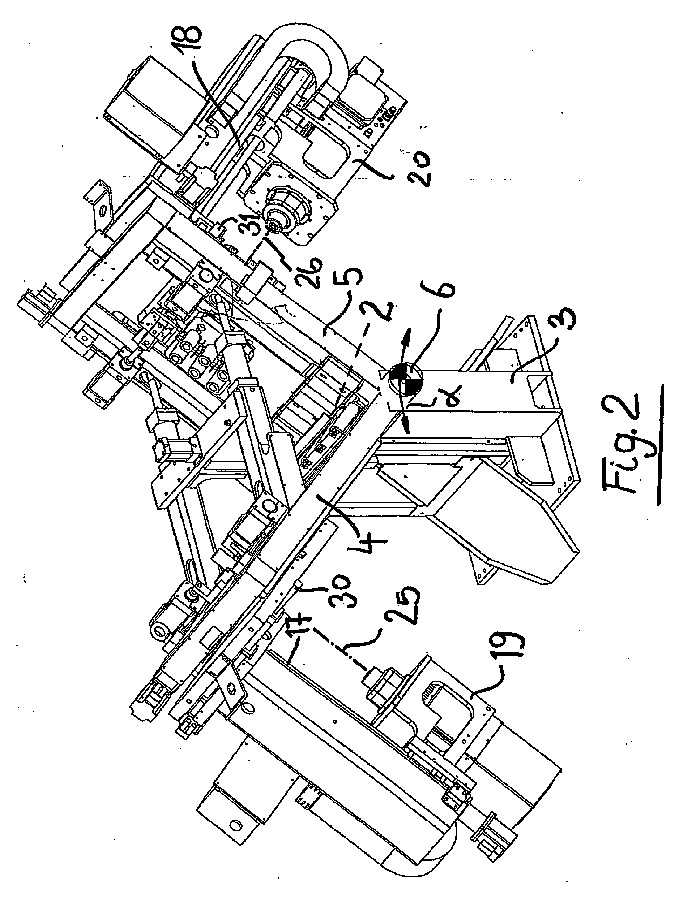

Figure 2 is a perspective view of the drilling device shown in figure 1.

### DESCRIPTION OF THE PREFERRED EMBODIMENT

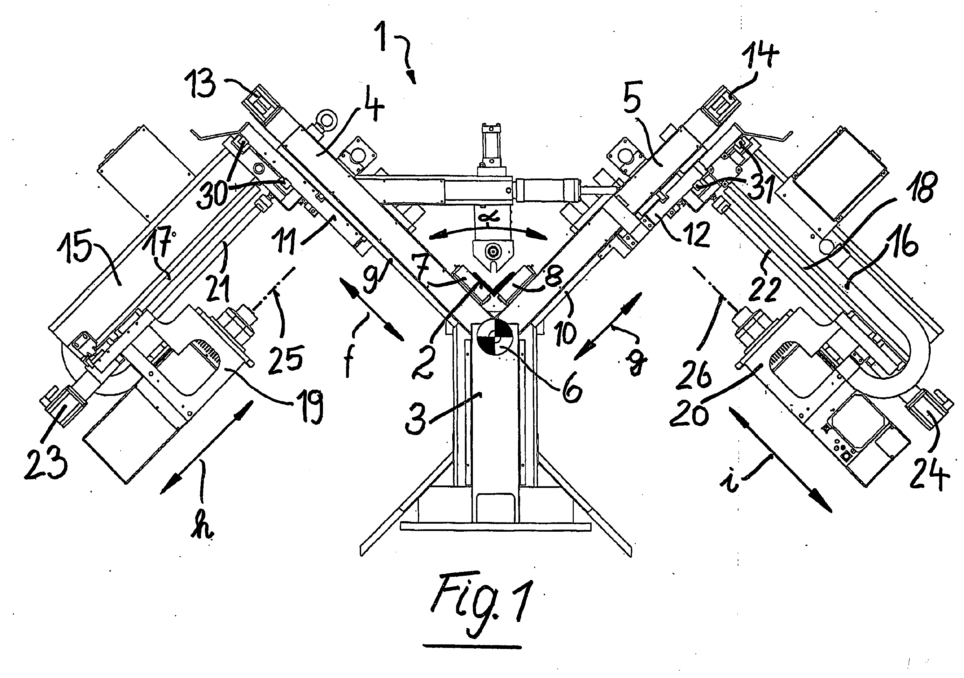

With reference to figure 1 the device, being generally indicated by the reference number 1 and arranged in a section member cutting line, comprises a base 3, therefrom swinging support arms 4 and 5 extend, said support arms having an adjustable angular position and defining an angle a therebetween, as shown in figure 1.

At the vertex 6, the arms 4 and 5 comprise a plurality of sliding rollers 7 and 8 for facilitating the movement of the section member 2.

The outer side of each arms 4, 5 supports precision guides 9 and 10 allowing a corresponding carriage 11, respectively 12, to controllably slide therealong, as shown by the arrows (f) and (g).

To that end the carriages 11 and 12 are operatively connected to the shaft of a controllable driving motor 13, respectively 14, each said motor 13 and 14 being arranged at the free end portion of the arms 4, 5 and is operatively connected to the system control assembly.

From each carriage or slide 11, 12, extends perpendicularly an arm 15, 16 including parallel guides 17 and 18, therealong a drilling assembly 19, 20, is slidably controllably driven in the direction of the arrows (h) and (i).

The drilling assemblies 19 and 20 are operatively connected to a corresponding driving threaded shaft 21 and 22, in turn operatively connected to shaft driving controllable motors 23, 24, which are controlled, for example, by encoder means of a per se known type, which are in turn operatively connected to the system control means.

Each drilling assembly 19, 20 supports a machining tool 25, 26 schematically indicated by a dot and dash line.

Advantageously, the arm 15, respectively 16, is slidably driven along guides 30, respectively 31, forming a complementary axis parallel to the section member driving axis for performing machining operations on a target area of the section member 2 without any need of relocating said section member 2.

## Claims

1. A drilling device (1) for drilling side portions of large section members, said device being arranged in a cutting system for cutting individual section member lengths, starting from a long section member, said device comprising a base (3), **characterised in that** swinging support arms (4, 5) extend on the base (3), said support arms being arranged with a V pattern enclosing an angle (a), each said support arm (4, 5) including a plurality of sliding rollers (7, 8) for causing said section member (2) to slide thereon, said swinging arms (4, 5) including guides (9, 10) slidably supporting a controllably driven carriage (11, 12) operatively connected to a threaded screw, each said threaded screw being operatively connected to a controllable motor (13, 14), each said carriage (11, 12) having a movable arm (15, 16) which may be controllably displaced along guides (30, 31) and comprising parallel guides (17, 18) engaging a drilling assembly (19, 20), each drilling assembly (19, 20) being operatively coupled to a driving shaft (21, 22), each said driving shaft (21, 22) being operatively connected to a corresponding controllable motor (23, 24).

2. A drilling device (1), according to claim 1, **characterized in that** said arm (15), respectively said arm (16), is slidable along guides (30, respectively 31), which are parallel to a section member (2) driving axis.

## Patentansprüche

1. Eine Bohrvorrichtung (1) zum Bohren von Seitenteilen von großen Formstählen, wobei die Vorrichtung in einer Schneidevorrichtung zum Trennen unterschiedlicher Werkstücklängen vorgesehen ist. beginnend mit einem langen Seitenteil, wobei die genannte Vorrichtung ein Grundgestell (3) aufweist,
**dadurch gekennzeichnet, dass**
die verschwenkbaren Tragearme (4, 5) an der Basis (3) angeordnet sind und die genannten Tragearme V-förmig angeordnet sind und einen Winkel (α) begrenzen, wobei jeder genannte Tragearm (4 ,5) eine Mehrzahl von Gleitrollen (7,8) aufweist, auf denen das Bauteil (2) verschiebbar ist, und die genannten verschwenkbaren Tragearme (4, 5) Führungen (9, 10) aufweisen, die verschiebbar eine Halterung (11, 12) aufweisen, die mit einer Gewindespindel wirkverbunden sind, und jede der genannten Gewindespindeln mit einem steuerbaren Motor (13, 14) wirkverbunden ist und jede Halterung (11, 12) einen beweglichen Arm (15, 16) aufweist, der in gesteuerter Weise entlang von Führungen (30, 31) verschiebbar ist, unter Vorsehung von parallel angeordneten Führungen (17, 18), die eine Bohreinheit (19, 20) aufweisen und jede Bohreinheit (19, 20) mit einer Antriebswelle (21, 22) wirkverbunden ist und jede der genannten Antriebswellen (21, 22) mit einem steuerbaren Motor (23, 24) wirkverbunden ist.

2. Eine Bohrvorrichtung (1), nach Patentanspruch 1,
**dadurch gekennzeichnet, dass** der genannte Arm (15) bzw. der genannte Arm (16) entlang von Führungen (30 bzw. 31) verschiebbar ist und die Führungen parallel zu dem Bauteil angeordnet sind.

## Revendications

1. Dispositif servant (1) à percer les parties latérales de membres sectionnés de grande taille, ledit dispositif étant agencé dans un système servent à couper des longueurs individuelles de membres sectionnés, en commençant par un membre sectionné long, ledit dispositif comprenant une base (3), **caractérisé en ce que** des bras supports (4, 5) oscillants s'étendent sur la base (3), lesdits bras supports étant agencés en forme de V délimitant un angle (α), chaque bras support (4, 5) comprenant plusieurs rouleaux de glissement (7, 8) pour que ledit membre sectionné (2) puisse glisser dessus, sachant que lesdits bras oscillants (4, 5) incluent des guides (9, 10) qui soutiennent un chariot (11, 12) glissant à entraînement pilotable et connecté en opérations à une vis sans fin, chaque vis sans fin étant connectée, en opérations, à un moteur pilotable (13, 14), chaque chariot (11, 12) présentant un bras mobile (15, 16) qui peut être déplacé de manière pilotable le long de guides (30, 31) et comprenant des guides parallèles (17, 18) engageant un ensemble de perçage (19, 20), chaque ensemble de perçage (19, 20) étant couplé en opérations à un arbre d'entraînement (21, 22), chaque arbre d'entraînement (21, 22) étant connecté en opérations à un moteur (23, 24) pilotable correspondant.

2. Dispositif de forage (1) selon la revendication 1, **caractérisé en ce que** ledit bras (15), et/ou ledit bras (16) peut coulisser le long de guides (30 et/ou 31), situés parallèles à un axe d'entraînement d'un membre sectionné (2).
